(19) Europäisches Patentamt

European Patent Office

Office européen des brevets

(11) **EP 1 092 969 A2**

(12) **EUROPÄISCHE PATENTANMELDUNG**

(43) Veröffentlichungstag:
   **18.04.2001 Patentblatt 2001/16**

(51) Int. Cl.[7]: **G01M 15/00**

(21) Anmeldenummer: **00120191.2**

(22) Anmeldetag: **22.09.2000**

(84) Benannte Vertragsstaaten:
   **AT BE CH CY DE DK ES FI FR GB GR IE IT LI LU MC NL PT SE**
   Benannte Erstreckungsstaaten:
   **AL LT LV MK RO SI**

(30) Priorität: **15.10.1999 DE 19949876**

(71) Anmelder:
   **Volkswagen Aktiengesellschaft**
   **38436 Wolfsburg (DE)**

(72) Erfinder:
   • **Bensler, Henry, Dr.**
     **38518 Gifhorn (DE)**
   • **Oberg, Joachim, Dr.**
     **38165 Lehre (DE)**

(54) **Verfahren zum Ermitteln der Tumble-Zahl an einem Verbrennungsmotor**

(57)   Um die Optimierung der Strömungsverhältnisse in einem Zylinder eines Verbrennungsmotors und dessen Einlaßkanal leichter optimieren zu können, wird ein Verfahren zum Ermitteln der Tumble-Zahl einer Ladungsmasse, die in den Zylinder einströmt, vorgeschlagen, bei dem in einem Computer ein geometrisches Modell erzeugt wird, das wenigstens die Abmessungen des Zylinders beschreibt, die Abmessungen zumindest der beweglichen Teile eines üblicherweise verwendeten Anemometers auch vernachlässigt, bei dem für das geometrische Modell ein Strömungs-Differentialgleichungssystem gelöst wird und die Tumble-Zahl anhand der erhaltenen Geschwindigkeitswerte der Strömung in demjenigen Teilvolumen des Zylinders bestimmt wird, in dem sich die beweglichen Teile eines üblicherweise verwendeten Anemometers bewegen.

Phase I    Phase II    Phase III

FIG. 1

EP 1 092 969 A2

**Beschreibung**

Die vorliegende Erfindung betrifft ein Verfahren zum Ermitteln der Tumble-Zahl einer Ladungsmasse, die in einen Zylinder eines Verbrennungsmotors einströmt.

Die Tumble-Zahl ist eine Kenngröße der sogenannten Tumble-Strömung, einer Wirbelströmung, die sich während des Einsaugens der Ladungsmasse in einen Zylinder eines Verbrennungsmotors in dem Zylinder ausbildet.

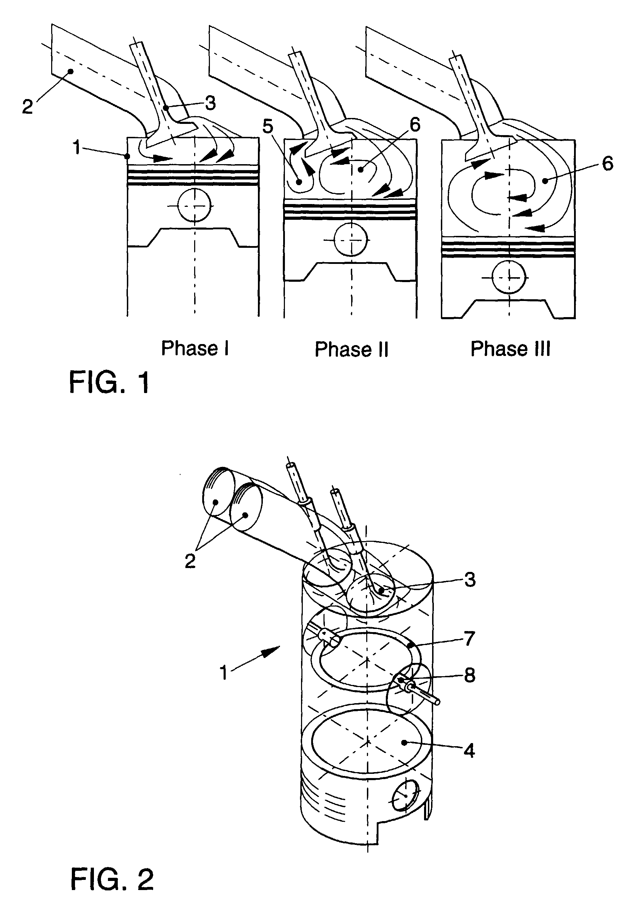

Die drei Phasen der Entstehung einer Tumble-Strömung in Abhängigkeit von Ventil- und Kolbenhub werden in Figur 1 dargestellt. Die Figur zeigt einen Zylinder 1 und einen davon durch ein Einlaßventil 3 abgesetzten Einlaßkanal 2 in drei Phasen des Gemisch-Ansaugtaktes. In Phase I, bei kleinem Hub des Ventils, tritt die einströmende Ladungsmasse weitgehend gleichmäßig über den gesamten Ventilspaltbereich in den Zylinder 1 ein. Der obere Bereich des Ventilspalts wird bei steigendem Ventilhub durch den geometrischen Aufbau des Einlasskanals 2 zunehmend begünstigt. Die notwendige Strömungsumlenkung ist oben geringer als im unteren Bereich des Ventilspalts. Weil die Geschwindigkeit der Ladungsmasse deutlich die Geschwindigkeit des Kolbens übersteigt, wird die Strömung vom Kolbenboden in Richtung Zylinderkopf umgelenkt. Dadurch bilden sich zwei unterschiedlich große Hauptwirbel 5,6 um die horizontale Achse aus (Phase II). Bei weiter öffnendem Ventil ergibt sich ein plötzlicher Strömungsabriss im unteren Ventilspaltbereich. Danach strömt die Ladungsmasse fast nur über den oberen Ventilspaltbereich in den Zylinder 1 und erzeugt die sogenannte Tumble-Strömung im gesamten Zylinder (Phase III).

Die Intensität dieser Tumble-Strömung kann mit Hilfe eines sogenannten Tumble-Prüfstands ermittelt werden.

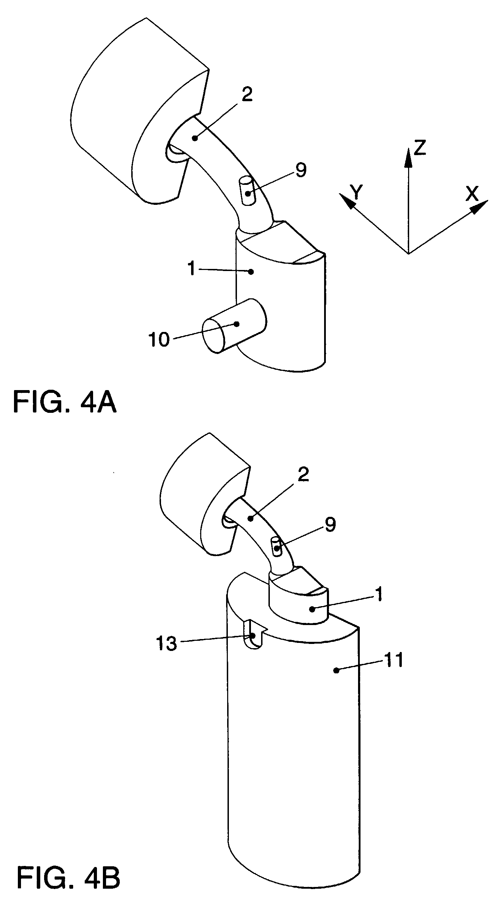

Die Figur 2 zeigt das Prinzip eines für diese Art von Messungen geeigneten Tumble-Prüfstandes. Bei einem konstanten Druckunterschied zwischen dem Eintritt des Einlaßkanals 2 und Zylinder 1 wird die Kanalströmung in einen Zylinder 1 mit einem feststehenden flachbödigen Kolben 4 eingeleitet. Die Seitenwand des Zylinders 1 ist in der Figur zum Teil fortgelassen, um ein im Innern des Zylinders drehbar angeordnetes Flügelrad 7 zeigen zu können, das Teil eines Anemometers ist, das die Stärke der Tumble-Strömung im Zylinder 1 anhand der Drehzahl des Flügelrads 7 um seine Welle 8 mißt. Die Welle 8 mit 5 mm Durchmesser erstreckt sich frei durch zwei (nicht dargestellte) seitliche Austrittsöffnungen in der Wand des Zylinders 1, durch die Ladungsmasse aus dem Zylinder 1 in eine Auslaßkammer abfließen kann. Diese in der Figur nicht dargestellte Auslaßkammer ist ein zylindrischer Rohrabschnitt, in dem der zu messende Zylinder koaxial eintauchend montiert wird (siehe auch Figur 4b). Die Auslaßkammer ist an ihrem oberen Ende geschlossen und unten offen.

Am Prüfstand werden auch der Massestrom, der Umgebungsdruck und die Temperatur der Luft gemessen.

Die Ermittlung der Tumble-Zahl erfolgt nach den Prüfstandsmessungen mit folgenden Gleichungen:

Erst wird die Tangentialgeschwindigkeit ($c_T$) der Zylinderladung mit der Umfangsgeschwindigkeit des Messflügels bestimmt mit

$$c_T = 2 \cdot \pi \cdot n \cdot R_{MFL} \qquad (1)$$

wobei $n$ die gemessene Flügelraddrehzahl und $R_{MFL}$ der mittlere Flügelradradius ist ($\equiv 0{,}364 \cdot D_{Zyl}$).

Die Axialgeschwindigkeit ($c_A$) im Zylinder wird berechnet mit

$$c_A = \frac{4 \cdot \dot{m}_{tats.}}{\pi \cdot D_{Zyl}^2 \cdot \rho_{Zyl}} \qquad (2)$$

wobei $\dot{m}_{tats.}$ der tatsächliche Massenstrom, $D_{Zyl}$ der Zylinderdurchmesser und $\rho_{Zyl}$ die Dichte der Luft im Zylinder ist.

Durch den Bezug der tangentialen Geschwindigkeitskomponente $c_T$ auf die gleichzeitig ermittelte Axialgeschwindigkeit $c_A$ wird die Tumble-Stärke in Form einer dimensionslosen Kenngröße, der Tumble-Zahl (T) berechnet:

$$T = \frac{c_T}{c_A} \qquad (3)$$

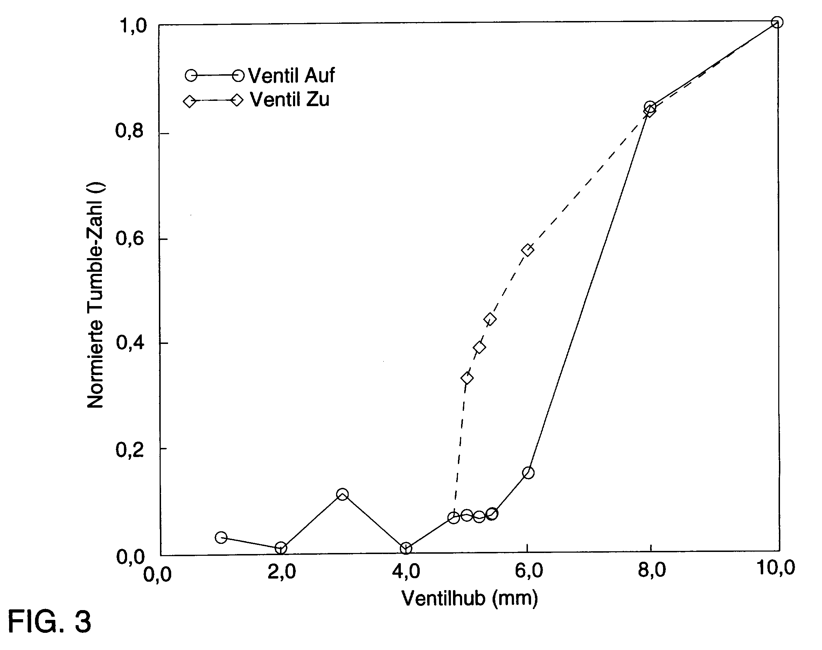

Die Messungen werden über den Ventilhubverlauf ermittelt. Der Ventilhub (h) wird auf 1 mm eingestellt und eine konstante Druckdifferenz von 150 mm Wassersäule im Zylinder erzeugt. Dadurch entsteht ein konstanter Massenstrom im Zylinder und das Flügelrad dreht sich mit einer konstanten Winkelgeschwindigkeit. Die Messwerte werden gespeichert und der nächste Ventilhub eingestellt und gemessen. Sukzessiv werden Messungen gemacht für 1,0 mm ≤ h ≤ 10,0 mm. Danach werden Messdaten auf dem umgekehrten Weg von 10,0 bis 1,0 mm aufgenommen. Die normierten Tumble-Zahlen ($T^*$) für einen typischen Vierventil-Einlasskanal werden in Figur 3 dargestellt. Man kann sehen, dass die Tumble-Zahlen bei niedrigen und hohen Ventilhüben gut übereinstimmen. Bei kleinen Ventilspalten ist keine Tumble-Strömung zu erkennen. Erst ab 6,0 mm wird das Flügelrad in Bewegung gesetzt mit einer kleinen Tumble-Zahl von $T^*$=0,15. Bei 8,0 mm Ventilhub ergibt sich eine starke Tumble-Strömung mit $T^*$=0,84. Ein maximaler Wert von $T^*$=1,0 wird bei 10 mm Ventilhub erreicht. Bei schließendem Ventil ist die Tumble-Zahl gleich bis zu h=8mm. Zwischen h<8,0 mm und 4,8 mm Ventilhub ist ein Hystereseeffekt zu erkennen. Die Tumble-Zahl wird progressiv kleiner bis zu einem Ventilhub von 4,8 mm, von wo die Tumble-Zahlen mit den kleinen Werten dann wieder übereinstimmen. Ein geeignetes Simulationsverfahren sollte in der Lage sein, auch diese Hysterese zu reproduzieren.

Der Wert der Tumble-Zahl ist abhängig von der Geometrie des Zylinderkopfs, durch dessen Ventil oder Ventile die Ladungsmasse einströmt, und sie wird auch beeinflußt von der Form der Ansaugkanäle, durch die die Ladungsmasse den Ventilen zugeführt wird.

Messungen der Tumble-Zahl an einem solchen Prüfstand sind kosten- und zeitaufwendig, da für jede Messung ein fertiggeformter Einlaßkanal beziehungsweise ein bearbeiteter Zylinderkopf benötigt werden. Für jeden Optimierungsschritt ist eine Überarbeitung von deren Gestalt oder gar eine Neuanfertigung erforderlich. Daher ist es wünschenswert, bereits über eine voroptimierte Kanal- beziehungsweise Zylindergeometrie zu verfügen, bevor erste Messungen am Prüfstand vorgenommen werden, um so die Zahl der notwendigen Optimierungsschritte zu verringern.

Für die Auslegung von Verbrennungsmotorenkomponenten wie etwa Saugrohren, Kanälen etc. sind numerische Methoden seit langem in Gebrauch. Als Beispiel wird hier auf Bensler, H.P. und Oppermann, R., CFD Optimization of Power Train Components, Third International Conference on Computers in Reciprocating Engines and Gas Turbines ImechE, C499/057/96/, 1996 oder Beesten, N., Perspektiven der Strömungsberechnung bei Volkswagen, Numerische Strömungsberechnung im Automobilbau, Haus der Technik, Essen, 25. bis 26. März 1998 verwiesen.

Die Anwendung derartiger Methoden auf die Voroptimierung der Geometrie von Zylinderkopf und Einlaßkanal vor Messungen am Tumble-Prüfstand ist problematisch, da das in einem solchen Prüfstand notwendigerweise verwendete Anemometer die Strömungsverhältnisse im Innern des Zylinders, in dem es angeordnet ist, beeinflußt. Die sich bewegenden Teile des Anemometers in eine Simulation der Strömungsverhältnisse einzubeziehen, erfordert jedoch einen rechentechnischen Aufwand, der die Fähigkeiten handelsüblicher Strömungsberechnungssoftware bei weitem überschreitet.

Der herkömmliche Ansatz zum Ermitteln der Tumble-Zahl ist daher die Messung an dem bekannten Prüfstand mit Hilfe eines körperlichen Modells.

Aufgabe der Erfindung ist, ein Verfahren zum Ermitteln der Tumble-Zahl anzugeben, das mit geringem Zeit- und Kostenaufwand zumindest eine Voroptimierung der Strömungsverhältnisse der Ladungsmasse an einem Verbrennungsmotor erlaubt.

Soweit zum Verständnis der Erfindung erforderlich, wird im folgenden zunächst das herkömmliche Verfahren der Ermittlung am Prüfstand beschrieben.

Die Aufgabe wird gelöst durch ein Verfahren, bei dem in einem Computer ein geometrisches Modell erzeugt wird, das wenigstens die Abmessungen des Zylinders beschreibt, die Abmessungen zumindest der beweglichen Teile des Anemometers aber vernachlässigt und bei dem für das geometrische Modell ein Strömungs-Differential-Gleichungssystem gelöst wird und die Tumble-Zahl anhand der erhaltenen Geschwindigkeitswerte der Strömung in demjenigen Teilvolumen des Zylinders bestimmt wird, in dem sich die beweglichen Teile des üblicherweise verwendeten Anemometers bewegen würden. Eine solche Näherung ist zweckmäßig, da sie den Rechenaufwand für die Lösung des Differential-Gleichungssystems ganz erheblich vereinfacht, und weil davon auszugehen ist, daß diese beweglichen Teile nur eine vernachlässigbare Bremswirkung auf die Strömung im Zylinder haben werden.

Die Gestalt des Anemometers kann im geometrischen Modell völlig vernachlässigt werden, um den Rechenaufwand gering und die Rechenzeiten kurz zu halten. Eine bessere Approximation der tatsächlichen Strömungsverhältnisse wird bei einem Anemometer mit ortsfester Welle dadurch erreicht, daß die Abmessungen der Welle von dem geometrischen Modell beschrieben werden.

Vorzugsweise ist auch die Gestalt eines Einlaßkanals, der von dem Zylinder durch ein Einlaßventil abgesetzt ist, Teil des geometrischen Modells.

Nach dem durch Lösen des Strömungs-Differentialgleichungssystems die Geschwindigkeitswerte der Strömung im Zylinder bekannt sind, kann für die Bestimmung der Tumble-Zahl vorteilhafterweise ein Mittelwert der auf eine Drehachse des Anemometers bezogenen Winkelgeschwindigkeit der Strömung über dasjenige Teilvolumen gebildet werden, in dem sich die beweglichen Teile des Anemometers bewegen.

Die beweglichen Teile des Anemometers können insbesondere aus einer Kreisscheibe bestehen, die ein kugelförmiges Teilvolumen definiert. Ihr Durchmesser kann im wesentlichen gleich dem Innendurchmesser des Zylinders sein.

Weitere Merkmale und Vorteile der Erfindung ergeben sich aus dem nachfolgend anhand von Figuren näher erläuternden Ausführungsbeispiel der Erfindung.

Es zeigen:

Figur 1, bereits erwähnt, die Phasen der Entstehung der Tumble-Strömung;

Figur 2, bereits erwähnt, das Prinzip eines Tumble-Prüfstands;

Figur 3, bereits erwähnt, das Hystereseverhalten der Tumble-Zahl beim Öffnen und Schließen des Einlaßventils;

Figuren 4A und B jeweils perspektivische Ansichten von geometrischen Modellen gemäß zwei verschiedenen Ausgestaltungen des erfindungsgemäßen Verfahrens,

Figuren 5A und 5B die Verteilung der Gitterpunkte für die Simulation der Strömungsverteilung in den Modellen der Figuren 4A und 4B;

Figuren 6A und B jeweils einen Schnitt durch die Modelle mit eingezeichneten Strömungspfeilen quer zur Achse der Tumble-Bewegung;

Figur 7 die Verteilung der Strömungsgeschwindigkeit im Ventilspalt, jeweils gemäß den zwei geometrischen Modellen;

Figuren 8A und 8B die Strömungsverhältnisse in den zwei Modellen in einer Schnittebene, die mit der Symmetrieebene der Modelle zusammenfällt;

Figur 9 zeigt die Verteilung der axialen Komponenten der Strömungsgeschwindigkeit im Zylinder entlang der Linie IX-IX aus Figur 8A beziehungsweise 8B.

Figuren 10A und B zeigen die Geschwindigkeitsverteilungen am Austritt aus dem Zylinder, jeweils gemäß den zwei Modellen.

Figur 4A zeigt ein erstes, einfaches geometrisches Modell eines Zylinders 1 einer Brennkraftmaschine mit einem zugeordneten Einlaßkanal 2. Der Zylinder und der Einlaßkanal haben eine Symmetrieebene senkrecht zur x-Achse der Figur. Für eine numerische Simulation des Strömungsverhältnisses in ihnen genügt es daher, jeweils nur eine Hälfte zu berücksichtigen. Dementsprechend sind der Zylinder 1 und der Strömungskanal 2 in der Figur jeweils halb dargestellt, der im Modell entfallene Teil ist in der Figur durch gestrichelte Umrisse angedeutet.
Der Einlaßkanal 2 gabelt sich vor Erreichen des Zylinders 1, in jedem der zwei gegabelten Stücke ist ein Ventil angeordnet, dessen Führungsrohr 9 in der Figur gezeigt ist. Durch das Ventil in den Zylinder 1 eingetretene Ladungsmasse verläßt den Zylinder über eine Austrittsöffnung, die in dem hier dargestellten einfachen Modell durch einen Rohrstutzen 10 approximiert ist. Dieses einfache geometrische Modell enthält nur Informationen über die Gestalt des Zylinders und des Einlaßkanals, nicht aber über die des Prüfstands, in dem diese montiert sind.
Das in Figur 4B dargestellte detailliertere Modell entspricht in seinem Einlaßkanal 2 und im Kopf des Zylinders 1 dem Modell aus Figur 4A und muß deshalb in diesem Bereich nicht erneut beschrieben werden. Der untere Teil des Zylinders 1 taucht in eine zylindrische Auslaßkammer 11 des Prüfstands ein, und ist mit dieser durch zwei kreisrunde Ausschnitte 12 in seiner Seitenwand verbunden, die in der Figur gestrichelt dargestellt sind. Durch diese Ausschnitte 12 erstreckt sich eine (in der Figur der Übersichtlichkeit halber nicht dargestellte) runde Welle, die in zwei gegenüberliegenden Aussparungen 13 der Auslaßkammer 11 gelagert ist. Diese Welle entspricht der Welle des üblicherweise auf einen Tumble-Prüfstand verwendeten Anemometers, dessen geometrisches Modell die Figur darstellt. Die Welle dreht sich zwar bei den Strömungsmessungen, doch ist ihre Gestalt dabei unveränderlich. Deshalb wird sie im geometrischen Modell als unbewegt approximiert. Das Flügelrad, das in der Praxis an der Welle montiert ist, ist nicht Teil des geometrischen Modells.
Geometrische Modelle der in Figur 4A und 4B gezeigten Art können zum Beispiel mit Hilfe eines handelsüblichen CAD-Programms erzeugt werden.
Die Strömungsverteilung in den Modellen wird mit Hilfe eines Finite-Volumen-Berechnungsprogramms durchgeführt. Dieses Programm löst dreidimensional zeitabhängig für kompressible oder inkompressible Medien die Kontinuitätsgleichung, die Navier-Stokes-Gleichung und die Energietransportgleichung. Insbesondere die Fähigkeit zur zeitabhänigen Rechnung ist von Bedeutung, und das in Figur 3 dargestellte Hystereseverhalten modellmäßig reproduzieren zu können.
Das Turbulenzmodell ist das Standard k-ε Modell, das aus Launder, B.E. und Spalding, D.B., Mathematical Models of Turbulence, Academic Press, New York 1972 bekannt ist. Es basiert auf isotroper Turbulenz bei hohen Reynolds-Zahlen. Die Gleichungen werden implizit gelöst durch iterative oder „Predictor-Corrector"-Methoden. Es wird ein orthogonal strukturiertes kartesisches Berechnungsgitter angewendet, in dem eine Wandzellenvolumen- und Oberflächen-Adaption durchgeführt wird. Die Berechnungsgitter werden automatisch mit einem Gittergenerator erzeugt. Bereiche mit lokaler Gitterverfeinerung werden angewandt, um eine bessere Auflösung der Strömungsbereiche an der Wand und in Bereichen, wo hohe Geschwindigkeitsgradienten vorhanden sind, zu erhalten, wie zum Beispiel im Ventilspalt. Außerdem wird der übliche logarithmische Ansatz (Wand-Gesetz) benutzt, um die Strömungsgrenzschicht an der Wand zu bestimmen.

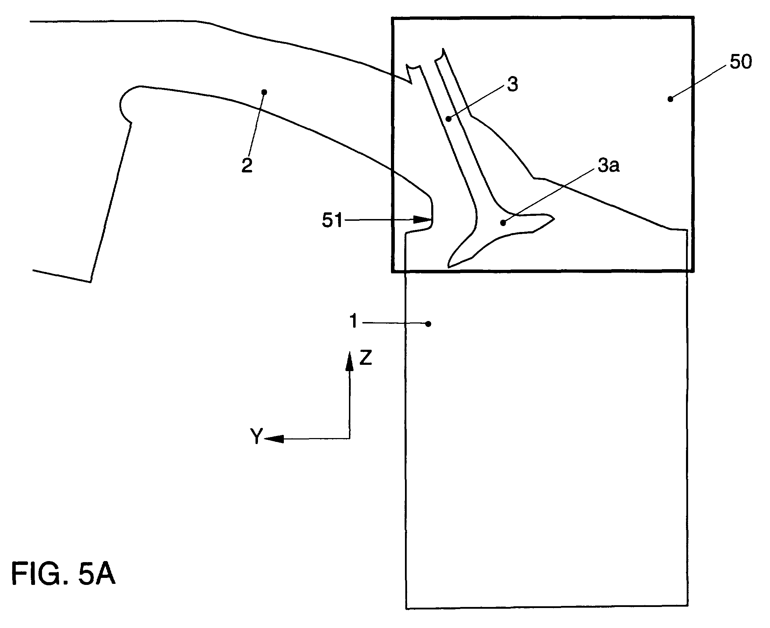

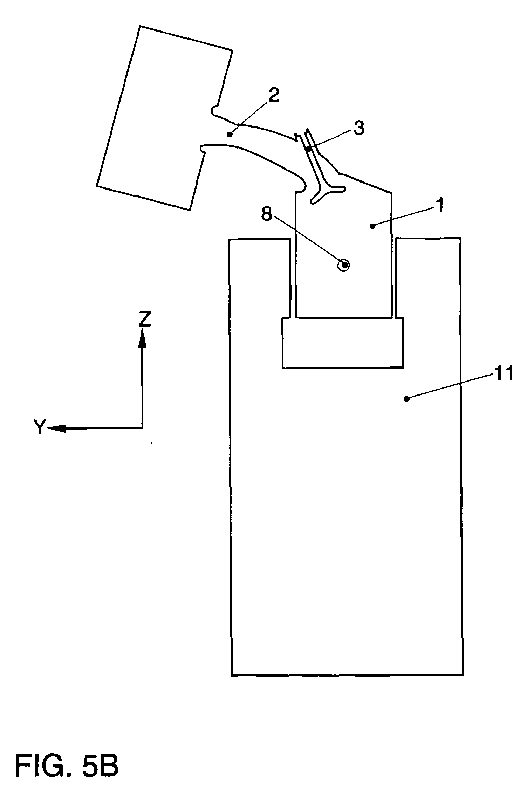

Die Figuren 5A und 5B zeigen jeweils Seitenansichten der Berechnungsgitter für die zwei Modelle aus Figur 4A beziehungsweise 4B bei einem Ventilhub von 10 mm. Man erkennt, daß innerhalb des umrahmten Bereichs 50 der Figur 5A, der den Übergang vom Einlaßkanal 2 zum Zylinder 1 umfaßt, das Berechnungsgitter feiner ist als im Anfangsbereich des Einlaßkanals 2 oder im unteren Bereich des Zylinders 1. In der Umgebung des Kopfs 3a des Ventils 3, im Bereich 51, ist das Berechnungsgitter abermals verfeinert.

Beim in Figur 5B dargestellten zweiten Modell ist das Berechnungsgitter im Bereich des Zylinders 1 und des Einlaßkanals 2 ähnlich fein verteilt wie beim Modell der Figur 5A. In der Auslaßkammer 11, insbesondere in ihrem unteren Bereich, ist das Gitter wesentlich grober.

Bei einer praktischen Anwendung des erfindungsgemäßen Verfahrens wurden für das einfachere Modell der Figur 4A 210.000 interne Zellen verwendet, für das detailliertere der Figur 4B 310.000.

Der Tumble-Prüfstand benutzt einen konstanten Druckabfall von 150 mm Wassersäule, um die Ladungsmasse zu bewegen. Für die Berechnungen könnte man diesen Druckabfall als Strömungsrandbedingungen direkt auf die Eintritts- und Austrittsflächen des Modells annehmen. Für den oben erwähnten Prüfstand ist dies nicht zweckmäßig, weil der Druck am Prüfstand direkt im Zylinder an der Wand gemessen wird. Alternativ wurden deshalb die gemessenen Massenströme am Tumble-Prüfstand bei den verschiedenen Ventilhubstellungen als Randbedingung für die Berechnung benutzt. Es wurden Berechnungsgitter mit Ventilhüben von 6, 8 und 10 mm für beide Modellvarianten simuliert. Da der Einlasskanal und der Tumble-Prüfstand spiegelsymmetrisch sind, werden nur halbe Berechnungsgitter für die Simulationen angewendet. Dadurch werden die Berechnungszeiten noch einmal halbiert. Die vereinfachten Modelle wurden auf einer Einzel-Prozessor-Rechenmaschine berechnet und das detaillierte Modell wurde mit einer 4-Prozessor Workstation parallel berechnet.

Diese Rechnung liefert die Verteilung der Strömungsgeschwindigkeit der Ladungsmasse innerhalb des betrachteten Modells. Um hieraus die Tumble-Zahl zu gewinnen, werden, wie eingangs angegeben, Tangentialgeschwindigkeit $c_T$ und Axialgeschwindigkeit $c_A$ im Zylinder benötigt. Die Axialgeschwindigkeit kann erhalten werden durch Integrieren der Axialkomponenten der Geschwindigkeitsverteilung über einen Querschnitt des Zylinders. Um die Tangentialgeschwindigkeit $c_T$ zu erhalten, wird die Winkelgeschwindigkeit der Strömung bezogen auf die Wellenachse über dasjenige Teilvolumen des Zylinders integriert, indem sich das Flügelrad bewegt, und durch Division durch das Volumen wird ein Mittelwert dieser Winkelgeschwindigkeit erhalten. Dieser Mittelwert wird gleichgesetzt mit der Winkelgeschwindigkeit des Flügelrades. Die Tumble-Zahl kann nun anhand der eingangs aufgeführten Formeln (1) und (3) berechnet werden.

Im folgenden werden die bei der praktischen Anwendung des Verfahrens erhaltenen Ergebnisse behandelt.

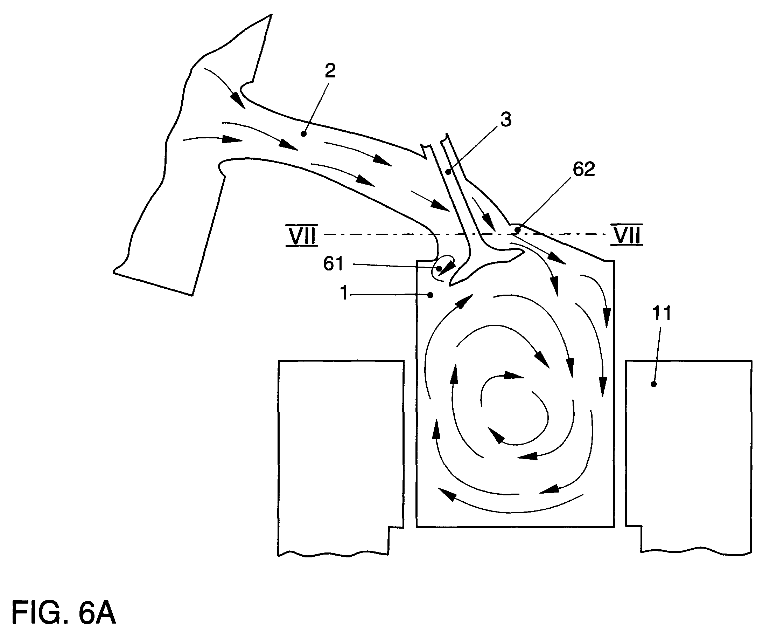

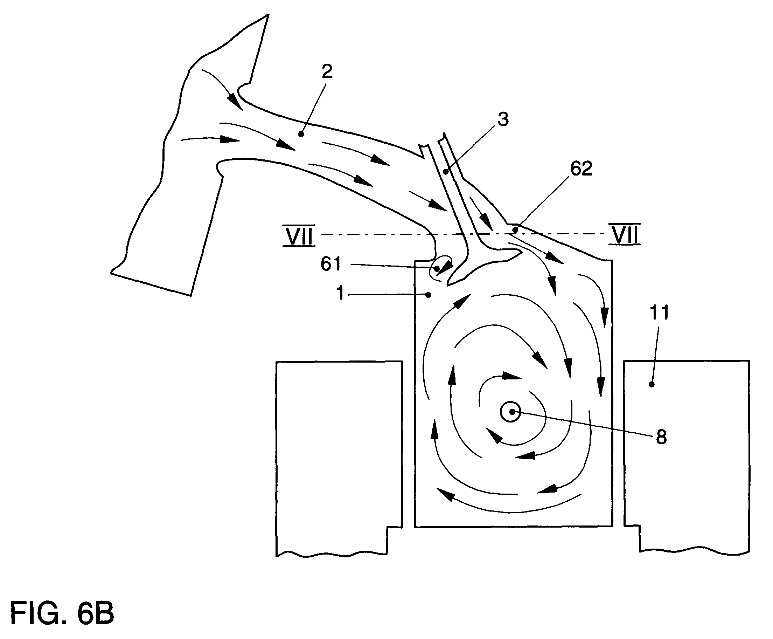

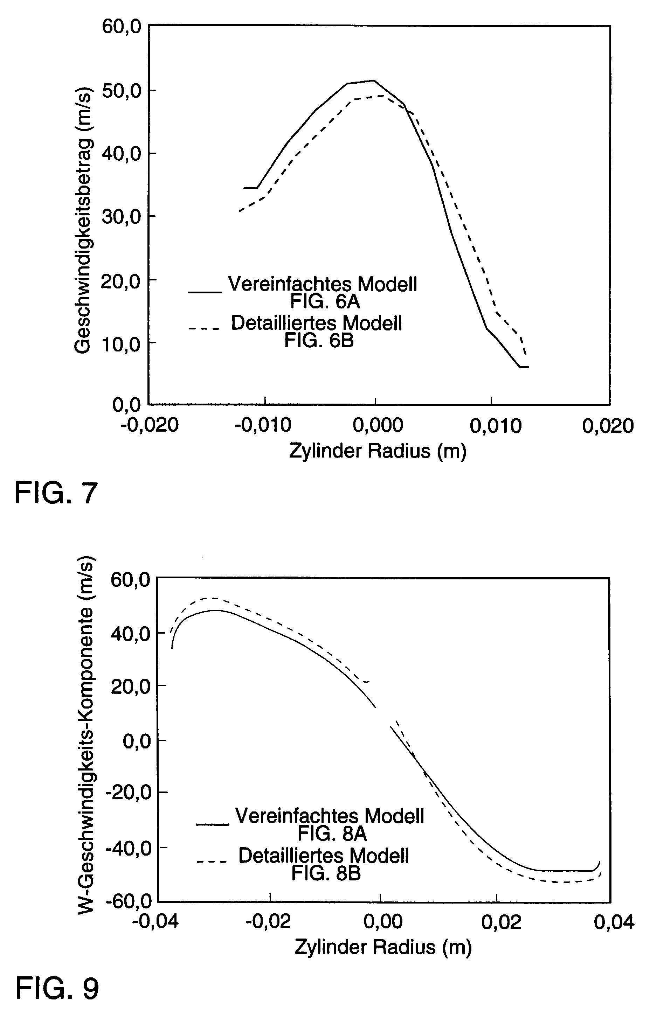

Zur Analyse der Unterschiede zwischen dem vereinfachten und dem detaillierten Modell wurden die Berechnungsergebnisse in bestimmten Ebenen verglichen. Die Figuren 6A,6B zeigen einen Schnitt in der durch das Ventil verlaufenden, zur yz-Ebene von Figur 4A und 4B parallelen Ebene bei einem Hub des Ventils von 10 mm, seitlich betrachtet für beide Modellvarianten. Die Strömungen im Einlasskanal 2, im Ventilspalt und im Zylinder 1 sehen sehr ähnlich aus. Im unteren Ventilspaltbereich ist ein großer Wirbel 61 zu erkennen, der den Ventilspalt erfüllt. Für beide Modelle liegt die Hauptströmung im oberen Ventilspalt 62, wie dies zu erwarten ist nach den in mit Bezug auf Figur 1 beschriebenen Phasen. Betrachtet man die Strömung im Zylinder, so prägt sich eine sehr gute Tumble-Strömung aus mit der Wirbelmitte an der gleichen Stelle bei beiden Modellvarianten. Das Wirbelzentrum liegt 4 mm links der Zylindermitte und 6 mm über der Achse des seitlichen Austrittes. Die Welle 8 des Flügelrades ist im detaillierten Modell der Figur 6B zu erkennen. Die Strömung in der äußeren Auslaßkammer 11 des detaillierten Modells hat einen kleinen Betrag im Vergleich zur Strömungsgeschwindigkeit im Zylinder. Die Einlasskanal-Geometrie ist für beide Modelle identisch. Um zu untersuchen, ob die Strömung im Ventilspalt der zwei Modelle auch identisch ist, wurde der Geschwindigkeitsbetrag der Hauptströmung örtlich hoch aufgelöst analysiert. In Figur 7 ist das Profil des Geschwindigkeitsbetrages dargestellt auf der Linie VII-VII der Figuren 6A,6B, die 8 mm oberhalb der Quetschspalt-Ebene (Zylinderkopf-Unterseite) und in der gleichen Längsschnitt-Ebene wie in Figur 6A,6B liegt. Für beide Modelle steigt der Geschwindigkeitsbetrag bis zur Zylindermitte an. Das vereinfachte Modell hat einen maximalen Betrag von 51,5 m/s, das detaillierte Modell einen etwas kleineren Wert von 49,7 m/s. Das vereinfachte Modell hat den höheren maximalen Geschwindigkeitsbetrag, dieser fällt aber auch schneller ab als der des detaillierten Modells. Man erkennt, dass die Strömung des detaillierten Modells den Ventilspalt besser füllt und nicht so steil in den Zylinder einströmt, wie es sich im vereinfachten Modell ergibt. Da die Strömung im Ventilspalt nicht identisch ist, ist zu erwarten, dass auch die Zylinder-Strömung nicht identisch sein wird.

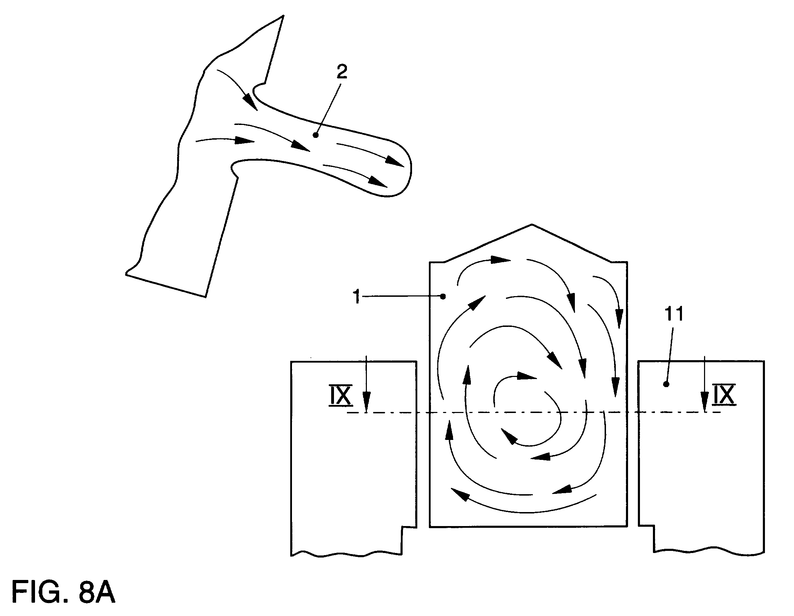

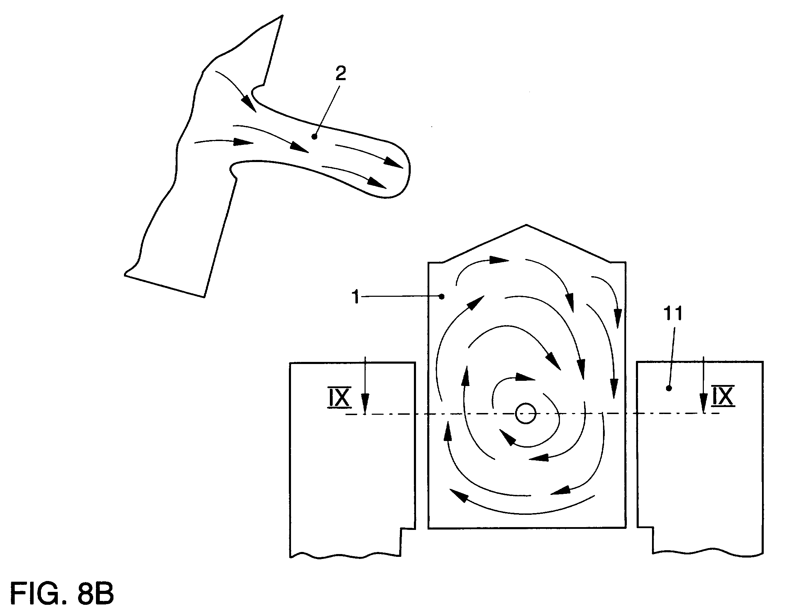

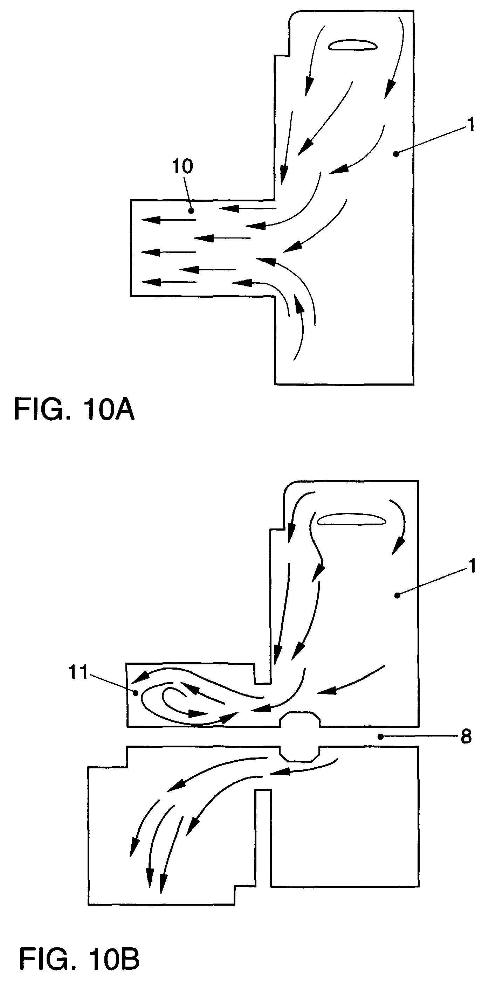

Zur Untersuchung der Strömung im Zylinder kann die Strömung des Zylinders in einem Schnitt in der Zylindermitte, das heißt entlang der Symmetrieebene des Zylinders 1 und des Einlaßkanals 2, bei einem Ventilhub von 10 mm (Figuren 8A,8B) betrachtet werden. Rein visuell ist die Struktur der Strömung und das Zentrum der Tumble-Wirbel sehr ähnlich denen in Figur 6A und 6B. Die Figur 9 zeigt die W-Komponente der Strömungsgeschwindigkeit (in axialer z-Richtung) auf einer Linie durch die Mitte des Zylinders in der Mittel-Ebene des Austrittes. Diese Linie ist in Figur 8A und 8B jeweils mit IX-IX bezeichnet. Es ist zu erkennen, dass die Geschwindigkeit des detaillierten Modells fast über den ganzen Zylinder-Radius einen höheren Wert hat als die des vereinfachten Modells. Die maximalen W-Geschwindigkeiten sind 48,3 und -49,4 m/s für das vereinfachte Modell sowie 52,6 und -53,1 m/s für das detaillierte Modell. Dieses ergibt eine höchste Differenz der maximalen W-Geschwindigkeiten zwischen beiden Modellvarianten von 8%.

Betrachtet man die Modelle von vom (d.h. auf die Ventile zu in der y-Richtung), so kann man die deutlichen Unterschiede der Strömungen in den zwei Modellvarianten erkennen. Figuren 10A,10B zeigen die Geschwindigkeits-Vektoren in einer Ebene durch die Zylindermitte. Für das vereinfachte Modell (Figur 10A) kann die Strömung, bedingt durch die als Rohrstutzen 10 angenommene Austrittsgeometrie, nur senkrecht zur Austrittsachse in einer rotierenden (initiert durch die Tumble-Strömung) Bewegung ausströmen. Das detaillierte Modell (Figur 10B) hat durch die Welle 8, den Ausschnitt 12 in der Zylinderwand und die Luftführung in der Auslaßkammer 11 eine viel kompliziertere Strömung mit Wirbeln über der Welle und hinter dem Ausschnitt. Eine Hauptströmung im äußeren-Bereich ist unter der Welle mit einer 45 Grad Neigung zu erkennen. Die Struktur der Austritts-Strömung beeinflusst ganz deutlich die Tumble-Strömung im inneren Zylinderbereich des detaillierten Modells.

In Tabelle 1 sind die berechneten und gemessenen normierten Tumble-Zahlen gegenübergestellt. Bei 10 und 8 mm Ventilhub ergibt das vereinfachte Modell Tumble-Zahlen, die ungefähr 11 % unter den gemessenen Tumble-Zahlen liegen. Das heißt, dass durch seine angenommene Ausström-Geometrie das vereinfachte Modell bei großen Ventilhüben eine etwa konstante relative Abweichung liefert. Bei einem Ventilhub von 6 mm treten ca. 40% Abweichung gegenüber der gemessenen Tumble-Zahl auf.

| Modell Variante | Ventilhub (mm) | Tumble Berechnung $T^*_{Be}$ | Tumble Messung $T^*_{Me}$ | $(\frac{T_{Be}}{T_{Me}} - 1) \cdot 100$ (%) |
|---|---|---|---|---|
| Vereinfachtes | 10,0 | 0,89 | 1,00 | -11,1 |
| Vereinfachtes | 8,0 | 0,75 | 0,84 | -10,7 |
| Vereinfachtes | 6,0 | 0,80 | 0,57 | 40,5 |
| Detailliertes | 10,0 | 0,98 | 1,00 | -2,3 |
| Detailliertes | 8,0 | 0,89 | 0,84 | 5,9 |
| Detailliertes | 6,0 | 0,87 | 0,57 | 51,3 |

Tabelle 1: Berechnete und gemessene normierte Tumble-Zahlen.

Das detaillierte Modell liefert eine deutlich bessere Korrelation zwischen Berechnung und Messung. Beim Ventilhub von 10 mm ist ein Unterschied zwischen Berechnung und Messung von unter 3% gefunden worden. Weniger als 6% Abweichung wurde bei 8 mm Ventilhub festgestellt. Aber wie beim vereinfachten Modell ergibt auch das detaillierte Modell bei 6 mm Ventilhub eine schlechte Tumble-Zahl-Korrelation, die hier bei 51% über der gemessenen Tumble-Zahl liegt. Die Figur 11 zeigt eine grafische Darstellung des Vergleiches der berechneten und gemessenen Tumble-Zahlen.

**Patentansprüche**

1.  Verfahren zum Ermitteln der Tumble-Zahl einer Ladungsmasse, die in einen Zylinder (1) eines Verbrennungsmotors einströmt, **dadurch gekennzeichnet,** daß in einem Computer ein geometrisches Modell erzeugt wird, das wenigstens die Abmessungen des Zylinders (1) beschreibt, die Abmessungen zumindest der beweglichen Teile (7) eines üblicherweise verwendeten Anemometers aber vernachlässigt, daß für das geometrische Modell ein Strömungs-Differentialgleichungssystem gelöst wird, und daß die Tumble-Zahl anhand der erhaltenen Geschwindigkeitswerte der Strömung in demjenigen Teilvolumen des Zylinders (1) bestimmt wird, in dem sich die beweglichen Teile (7) des üblicherweise verwendeten Anemometers bewegen würden.

2.  Verfahren nach Anspruch 1, **dadurch gekennzeichnet,** daß das geometrische Modell die Abmessungen der bei dem üblicherweise verwendeten Anemometer angeordneten ortsfeste Welle (8) beschreibt.

3.  Verfahren nach Anspruch 1, **dadurch gekennzeichnet,** daß das geometrische Modell das üblicherweise verwendete Anemometer vollständig vernachlässigt.

4.  Verfahren nach einem der vorhergehenden Ansprüche, **dadurch gekennzeichnet,** daß das geometrische Modell ferner die Gestalt eines Einlaßkanals (2) beschreibt, der vom Zylinder durch ein Einlaßventil (3) abgesetzt ist.

5.  Verfahren nach einem der vorhergehenden Ansprüche, **dadurch gekennzeichnet,** daß das geometrische Modell Austrittsöffnungen, aus denen die Ladungsmasse aus dem Zylinder (1) ausströmt, als Rohrabschnitte (10) approximiert.

6.  Verfahren nach einem der Ansprüche 1 bis 4, **dadurch gekennzeichnet,** daß das geometrische Modell ferner die Gestalt eines Auslaßbereichs (11) beschreibt, in den die Ladungsmasse aus dem Zylinder (1) ausströmt.

7.  Verfahren nach einem der vorhergehenden Ansprüche, **dadurch gekennzeichnet,** daß für die Bestimmung der Tumble-Zahl ein Mittelwert der auf eine Drehachse des üblicherweise verwendeten Anemometers bezogenen Winkelgeschwindigkeit der Strömung über das Teilvolumen gebildet wird.

Phase I    Phase II    Phase III

FIG. 1

FIG. 2

**FIG. 3**

EP 1 092 969 A2

FIG. 4A

FIG. 4B

FIG. 5A

EP 1 092 969 A2

FIG. 5B

FIG. 6A

EP 1 092 969 A2

FIG. 6B

EP 1 092 969 A2

EP 1 092 969 A2

FIG. 7

FIG. 9

15

FIG. 8A

EP 1 092 969 A2

FIG. 8B

EP 1 092 969 A2

FIG. 10A

FIG. 10B